(19)

Europäisches Patentamt
European Patent Office
Office européen des brevets

(11) **EP 3 437 859 A1**

(12) **EUROPEAN PATENT APPLICATION**
published in accordance with Art. 153(4) EPC

(43) Date of publication:
**06.02.2019 Bulletin 2019/06**

(51) Int Cl.:
**B32B 27/00** (2006.01)   **B32B 7/02** (2019.01)
**B32B 27/16** (2006.01)   **B32B 27/20** (2006.01)
**E04F 15/02** (2006.01)

(21) Application number: **17775191.4**

(22) Date of filing: **29.03.2017**

(86) International application number:
**PCT/JP2017/012837**

(87) International publication number:
**WO 2017/170656 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016068380**
**16.09.2016 JP 2016181476**

(71) Applicant: **Dai Nippon Printing Co., Ltd.**
**Tokyo 162-8001 (JP)**

(72) Inventor: **SHINBARA, Yuuhei**
**Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE SHEET FOR FLOORS AND DECORATIVE PANEL FOR FLOORS**

(57)    The present invention provides a decorative sheet for floors that has an appropriately low level of wiping resistance and from which not only grime that occurs during housing construction but also oil-based grime can be easily wiped off. The present invention provides a decorative sheet for floors that comprises a base material sheet and at least a surface-protecting layer on the base material sheet, the base material sheet being a thermoplastic resin sheet, the surface-protecting layer having a surface free energy of 27 mJ/m² or more and less than 30 mJ/m² and having a Martens hardness of 70 N/mm² or more, and the coefficient of slip resistance (C.S.R value) of the surface-protecting layer as measured with 100% cotton socks using a Tokyo Institute of Technology sliding tester (O-Y·PSM) being 0.3 or more.

# EP 3 437 859 A1

**Description**

Technical Field

The present invention relates to a decorative sheet for floors and a decorative plate for floors.

Background Art

Conventionally, decorative sheets are laminated on the surface of various articles in order to impart designability. For example, wall-covering materials, which are used on wall surfaces of buildings, and floor decorative materials, which are used on floor surfaces, are used with decorative sheets laminated on the surface.

Current decorative sheets for floors have a problem in that grime stuck on them during housing construction is difficult to remove, although most grime can be easily removed from them with cleaning after housing construction and before handover of the property. In particular, gypsum powder, which accounts for most grime that is difficult to remove, is white and thus noticeable and is composed of small particles (fine particles). Therefore, gypsum powder is considered to be a contaminant difficult to clean off.

As prior art, there is disclosed a decorative sheet that prevents reduction in easy cleanability (property of being easily cleaned), which is achieved by specifying surface irregularities of the decorative sheet so that such contaminants as described above do not easily enter recesses (Patent Literature (PTL) 1).

Citation List

Patent Literature

PTL 1: JP2014-069507A

Summary of Invention

Technical Problem

Although the contaminants can be removed from such decorative sheets as described above, ease of wiping when removing grime (wiping resistance) has not been taken into consideration. If a decorative sheet exhibits high resistance in wiping, a snagging feeling occurs, and removing grime is difficult. Furthermore, ease of wiping off oil-based grime (e.g., sebum grime) has also not been taken into consideration. Thus, such a conventional decorative sheet is problematic in terms of enhancing the ease of cleaning off various types of grime.

An object of the present invention is to provide a decorative sheet for floors that has an appropriately low level of wiping resistance and from which oil-based grime as well as grime that occurs during housing construction can be easily wiped off.

Solution to Problem

The present inventors conducted extensive research to develop a decorative sheet for floors that has an appropriately low level of wiping resistance and from which oil-based grime, as well as grime that occurs during housing construction, can be easily wiped off. As a result, the inventors found that the above problem can be solved by specifying the surface free energy and hardness of a surface-protecting layer. The present invention has been accomplished based on this finding.

More specifically, the present invention provides the following decorative sheets for floors and decorative plate for floors.

1. A decorative sheet for floors that comprises a base material sheet and at least a surface-protecting layer on the base material sheet,
the base material sheet being a thermoplastic resin sheet,
the surface-protecting layer having a surface free energy of 27 $mJ/m^2$ or more and less than 30 $mJ/m^2$ and having a Martens hardness of 70 $N/mm^2$ or more, and
the coefficient of slip resistance (C.S.R value) of the surface-protecting layer as measured with 100% cotton socks using a Tokyo Institute of Technology sliding tester (O-Y·PSM) being 0.3 or more.
2. The decorative sheet for floors according to Item 1, wherein the coefficient of slip resistance (C.S.R value) of the surface-protecting layer is less than 0.4.

3. The decorative sheet for floors according to Item 1 or 2, wherein the surface-protecting layer comprises a hydrophobic inorganic filler.

4. The decorative sheet for floors according to Item 3, wherein the hydrophobic inorganic filler has a particle size of 1 $\mu$m or more and 10 $\mu$m or less in terms of mode diameter.

5. The decorative sheet for floors according to Item 3 or 4, wherein the hydrophobic inorganic filler content is 0.5 parts by mass or more and 30 parts by mass or less, based on 100 parts by mass of resins that constitute the surface-protecting layer.

6. The decorative sheet for floors according to any one of Items 3 to 5, wherein the hydrophobic inorganic filler is hydrophobic silica.

7. The decorative sheet for floors according to any one of Items 1 to 6, wherein the resins that constitute the surface-protecting layer comprise an ionizing radiation-curable resin.

8. The decorative sheet for floors according to any one of Items 1 to 7, wherein the surface-protecting layer has a thickness of 10 $\mu$m or more.

9. The decorative sheet for floors according to any one of Items 1 to 8, comprising a transparent resin layer between the base material sheet and the surface-protecting layer, the transparent resin layer having an elastic recovery of 50% or more.

10. A decorative plate for floors comprising an adherend and the decorative sheet for floors according to any one of Items 1 to 9 on the adherend.

Advantageous Effects of Invention

The decorative sheet for floors according to the present invention has an appropriately low level of wiping resistance, grime that occurs during housing construction can be easily wiped off, and furthermore, oil-based grime can also be easily wiped off. In other words, the decorative sheet for floors of the present invention is excellent in terms of easy cleanability for various types of grime. Therefore, the decorative sheet for floors of the present invention can be suitably used for floors.

Brief Description of Drawings

Fig. 1 is a cross-sectional view illustrating an example of the decorative sheet for floors of the present invention.
Fig. 2 is a cross-sectional view illustrating an example of the decorative sheet for floors of the present invention.
Fig. 3 (a) is a schematic diagram of a diamond indenter used in the measurement of Martens hardness in the present specification;
Fig. 3 (b) is a schematic diagram of the press operation; and
Fig. 3 (c) is an example of press load and displacement.
Fig. 4 is a conceptual diagram of the elastic working region and the plastic working region in a load-displacement curve obtained by measuring Martens hardness. In Fig. 4, region (A) is the elastic working region, and region (B) is the plastic working region.

Description of Embodiments

1. Decorative Sheet for Floors of the Present Invention

The decorative sheet for floors of the present invention has the following features:

the decorative sheet comprises a base material sheet and at least a surface-protecting layer on the base material sheet;
the base material sheet is a thermoplastic resin sheet;
the surface-protecting layer has a surface free energy of 27 mJ/m$^2$ or more and less than 30 mJ/m$^2$ and has a Martens hardness of 70 N/mm$^2$ or more; and

the coefficient of slip resistance (C.S.R value) of the surface-protecting layer as measured with 100% cotton socks using a Tokyo Institute of Technology sliding tester (O-Y·PSM) is 0.3 or more. The decorative sheet for floors that has these features has an appropriately low level of wiping resistance; even when grime that occurs during housing construction (in particular, gypsum powder, which accounts for most grime that is difficult to remove) is present on the decorative sheet for floors, the grime can be easily removed; and furthermore, when grime that cannot be completely removed by simply wiping is removed by using a tool, such as a scraper, the surface of the decorative sheet for floors is less likely to be scarred. In other words, the decorative sheet for floors of the present invention is excellent in terms of easy cleanability for various types of grime. Therefore, the decorative sheet for floors of the present invention can be suitably used for floors.

The decorative sheet for floors of the present invention is explained in detail below. In the decorative sheet for floors of the present invention, "surface" refers to a front surface. When the decorative sheet for floors of the present invention is laminated on an adherend or the like, the front surface is opposite to a surface that is in contact with the adherend. The front surface is perceptible to the eye after lamination. In this specification, the surface side of the decorative sheet for floors of the present invention may be referred to as "the front" or "above," and the opposite side may be referred to as "the back" or "below." Below, upper and lower limits of numerical ranges indicated with numerals before and after "to" mean that the lower limit is X or more and the upper limit is Y or less. For example, the phrase "$\alpha$ to $\beta$" means the numerical range is $\alpha$ or more and $\beta$ or less.

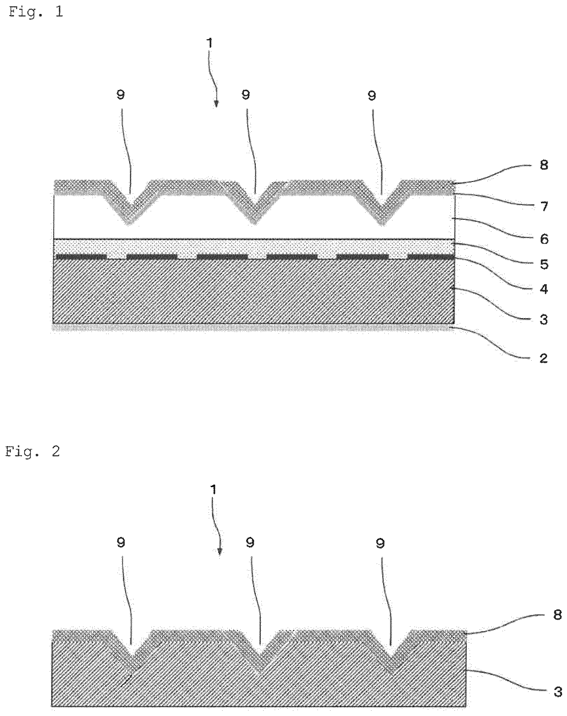

There is no specific limitation on the structure (layer structure) of the decorative sheet for floors of the present invention as long as the sheet meets the following requirements: the sheet comprises a base material sheet and at least a surface-protecting layer on the base material sheet;
the base material sheet is a thermoplastic resin sheet; the surface-protecting layer has a surface free energy of 27 mJ/m$^2$ or more and less than 30 mJ/m$^2$ and has a Martens hardness of 70 N/mm$^2$ or more; and
the coefficient of slip resistance (C.S.R value) of the surface-protecting layer as measured with 100% cotton socks using a Tokyo Institute of Technology sliding tester (O-Y·PSM) is 0.3 or more. The decorative sheet for floors of the present invention may be, for example, as shown in Fig. 1, composed of a base material sheet 3; a picture pattern layer 4, an adhesive layer 5, a transparent resin layer 6, a primer layer 7, and a surface-protecting layer 8 formed in this order on the base material sheet 3; and a back-side primer layer 2 formed on the back surface of the base material 3, with the uppermost surface side being embossed. Each of the layers is described below in detail using the decorative sheet for floors having this layer structure as a representative example. However, as shown in Fig. 2, the decorative sheet for floors of the present invention may be composed of a base material sheet 3 and a surface-protecting layer 8 formed on the base material sheet 3, with the uppermost surface side being embossed. Note that in the following description of each layer, reference symbols are omitted. The thickness of the layer referred to herein is a thickness as measured in a portion where the decorative sheet for floors has no surface unevenness, such as a portion that is not embossed.

Base Material Sheet

The decorative sheet for floors of the present invention comprises a base material sheet.

The base material sheet is a layer on the surface (front surface) of which a picture pattern layer and the like are sequentially laminated. As the base material sheet, a sheet (film) formed of a thermoplastic resin is used. Specific examples include polyethylene, ethylene-$\alpha$ olefin copolymers, polypropylene, polymethylpentene, polybutene, ethylene-propylene copolymers, propylene-butene copolymers, ethylene-vinyl acetate copolymers, saponified products of ethylene-vinyl acetate copolymers, ethylene-(meth)acrylic acid copolymers, ethylene-(meth)acrylic acid ester copolymers, and like olefin-based resins, polyvinyl chloride, polyethylene terephthalate, polybutylene terephthalate, polyamide, polycarbonate, polyethylene naphthalate, ionomers, acrylic acid ester-based polymers, methacrylic acid ester-based polymers, and the like. The base material sheet is formed by using these resins singly or in a combination of two or more. The term "(meth)acrylic acid" refers to acrylic acid and/or methacrylic acid; the same applies to other portions referring to "meth."

The base material sheet may be colored. In this case, the base material sheet can be colored by adding a colorant (pigment or dye) to such a thermoplastic resin as mentioned above. Examples of colorants include inorganic pigments, such as titanium dioxide, carbon black, and iron oxide; organic pigments, such as phthalocyanine blue; and various dyes. One or more such colorants may be selected from known or commercially available products. The colorant amount may be determined according to, for example, the desired color.

The base material sheet may contain various additives, such as fillers, matting agents, foaming agents, flame retardants, lubricants, antistatic agents, antioxidants, ultraviolet absorbers, and light stabilizers, as required.

The thickness of the base material sheet is suitably determined depending on the application of the final product, the method of use of the final product, etc. In general, the thickness of the base material is preferably 20 to 300 $\mu$m.

The surface (front surface) of the base material sheet may be subjected to a corona discharge treatment, if necessary, in order to increase the adhesion of the ink that forms the picture pattern layer etc. Methods and conditions for the corona discharge treatment may be determined according to known methods. If necessary, a corona discharge treatment may be performed on the back surface of the base material sheet, and a picture pattern layer, a back-surface primer layer, a backer layer, and like layers described below may be formed.

Picture Pattern Layer

The decorative sheet for floors of the present invention may have a picture pattern layer.

The picture pattern layer gives a desired picture (design) to the decorative sheet for floors, and the type etc. of picture are not limited. Examples include wood-grain patterns, leather patterns, marble grain patterns, pebbly patterns, tiled patterns, brick masonry patterns, textile patterns, geometric figures, characters, symbols, abstract patterns, and the like.

The method of forming the picture pattern layer is not particularly limited. For example, the picture pattern layer may be formed on the surface of the base material sheet by a printing method that uses ink obtained by dissolving (or dispersing) a known colorant (dye or pigment) together with a binding resin in a solvent (or a dispersion medium). The ink can be an aqueous composition, in terms of reducing the VOC of the sheet.

Examples of colorants include inorganic pigments, such as carbon black, titanium white, zinc white, red oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminum powder and bronze powder; pearlescent pigments, such as titanium oxide-coated mica and bismuth chloride oxide; fluorescent pigments; noctilucent pigments; and the like. Such colorants may be used singly or in a combination of two or more. These colorants may be used in combination with a filler (e.g., silica), an extender pigment (e.g., organic beads), a neutralizer, a surfactant, etc.

Examples of binding resins include hydrophilized polyester-based urethane resins, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, etc. Specific examples include polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenol-based resins, and other water-soluble synthetic resins; polynucleotides, polypeptides, polysaccharides, and like water-soluble natural polymers; etc. Other examples include natural rubber, synthetic rubber, polyvinyl acetate-based resins, (meth)acrylic-based resins, polyvinyl chloride-based resins, modified polyurethane-polyacrylic-based resins, etc., mixtures of natural rubber and the like mentioned above, and other resins. These binding resins can be used singly or in a combination of two or more.

Examples of the solvent (or dispersion medium) include petroleum-based organic solvents, such as hexane, heptane, octane, toluene, xylene, ethylbenzene, cyclohexane, and methylcyclohexane; ester-based organic solvents, such as ethyl acetate, butyl acetate, acetic acid-2-methoxyethyl, and acetic acid-2-ethoxyethyl; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; inorganic solvents, such as water; and the like. These solvents (or dispersion media) can be used singly or in a combination of two or more.

Examples of the printing method for forming the picture pattern layer include gravure printing, offset printing, screen printing, flexo printing, electrostatic printing, ink jet printing, etc. When a solid-like picture pattern layer is formed over the entire surface, various coating methods, such as roll coating, knife coating, air-knife coating, dye coating, lip coating, comma coating, kiss coating, flow coating, and dip coating, can be used. In addition to the above, usable examples include hand-drawing methods, marbling methods, photographic methods, transfer methods, laser beam drawing methods, electron beam drawing methods, metal partial deposition methods, etching methods, etc. Alternatively, such methods can be used with other forming methods.

The thickness of the picture pattern layer is not particularly limited, and can be suitably determined according to product characteristics. The layer thickness is in the range of about 0.1 to 10 μm.

Adhesive Layer

In order to increase the adhesion between the transparent resin layer and the picture pattern layer, an adhesive layer may be formed on the picture pattern layer. The adhesive layer is preferably a transparent adhesive layer. The transparent adhesive layer may be colorless transparent, colored transparent, semitransparent, or the like.

The adhesive is not particularly limited, and any adhesive known in the field of decorative sheets can be used. Examples of adhesives known in the field of decorative sheets include thermoplastic resins, such as polyamide resin, acrylic resin, and vinyl acetate resin; thermosetting resins, such as urethane-based resin; and the like. These adhesives can be used singly or in a combination of two or more. It is also possible to use a two-component curable polyurethane resin containing isocyanate as a curing agent or a polyester resin.

Although the thickness of the adhesive layer is not particularly limited, the thickness after drying is about 0.1 to 30 $\mu$m, and preferably about 1 to 20 $\mu$m.

Transparent Resin Layer

The decorative sheet for floors of the present invention may have a transparent resin layer.

The transparent resin layer is not particularly limited as long as it is transparent, and may be colorless transparent, colored transparent, semitransparent, or the like. Examples of resins that constitute the transparent resin layer include polyethylene, ethylene-$\alpha$ olefin copolymers, polypropylene (e.g., homopolypropylene and random polypropylene), polymethylpentene, polybutene, ethylene-propylene copolymers, propylene-butene copolymers, ethylene-vinyl acetate copolymers, saponified products of ethylene-vinyl acetate copolymers, ethylene-(meth)acrylic acid copolymers, ethylene-(meth)acrylic acid ester copolymers, olefin-based resins (e.g., olefin-based elastomers), polyethylene terephthalate, polybutylene terephthalate, polyamide, ionomers, acrylic acid ester-based polymers, methacrylic acid ester-based polymers, polycarbonate, cellulose triacetate, and the like. These resins may be used singly or in a combination of two or more.

The transparent resin layer preferably comprises an olefin-based resin, typified by polypropylene resin or polyethylene resin. The resin that constitutes the transparent resin layer more preferably comprises an olefin-based resin or an ionomer resin mentioned above.

The transparent resin layer may be colored, as long as it is transparent; however, it is particularly desirable that no colorant be mixed.

The thickness of the transparent resin layer is generally in the range of about 20 to 200 $\mu$m. The thickness of the transparent resin layer may exceed the above range, depending on, for example, the application of the decorative sheet for floors.

To enhance scratch resistance, impact resistance, and gouge resistance of the decorative sheet for floors, the transparent resin layer preferably has a Martens hardness of 11 N/mm$^2$ or more. In consideration of cracking of the decorative sheet for floors due to impact damage that may occur when an object is dropped on it, the Martens hardness of the transparent resin layer is preferably 11 N/mm$^2$ or more and 36 N/mm$^2$ or less, and more preferably 11 N/mm$^2$ or more and 31 N/mm$^2$ or less.

The Martens hardness of the transparent resin layer can be appropriately adjusted, for example, by a method of 1) changing the resin that constitutes the transparent resin layer to a resin having different hardness, or 2) using a mixture of two or more resins having different hardness as the resin that constitutes the transparent resin layer.

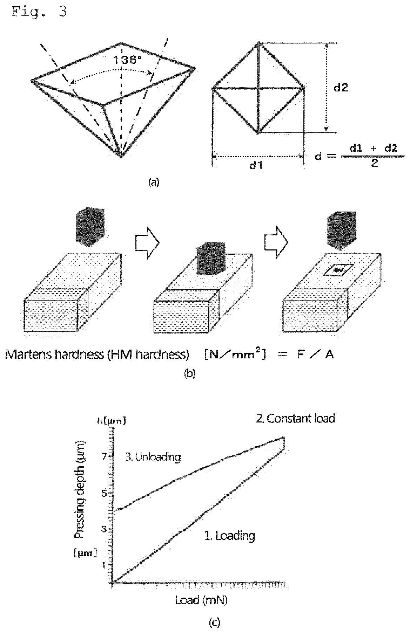

In this specification, the Martens hardness refers to a value measured by the nanoindentation method using a surface film physical property tester (PICODENTOR HM-500 produced by Fischer Instruments K.K.). A specific measurement method is as follows. In this measurement method, a diamond indenter (Vickers indenter) shown in Fig. 3 (a) is pressed into each measurement sample as shown in Fig. 3 (b). The surface area A (mm$^2$) is calculated from the length of the diagonal line of a pyramid-shaped dent formed on the surface, and test load F (N) is divided by the surface area A to thereby determine the hardness. The pressing conditions are as follows. As shown in Fig. 3 (c), first, a load of 0 to 5 mN is applied for 10 seconds at room temperature (ambient laboratory temperature). Next, a load of 5 mN is maintained for 5 seconds. Finally, unloading is performed from 5 to 0 mN for 10 seconds. The hardness determined by F/A, where A is surface area and F is test load, is the Martens hardness mentioned above. In this specification, in order to avoid the influence of the hardness of layers other than the layer whose Martens hardness is to be measured, the Martens hardness of the cross-section of the layer whose Martens hardness is to be measured (transparent resin layer) was measured. For this measurement, the decorative sheet for floors was embedded in a resin (cold-curing epoxy two-component curable resin) and allowed to stand at room temperature for at least 24 hours for curing. The cured embedded sample was then mechanically polished to expose the cross-section of the layer whose Martens hardness is to be measured (transparent resin layer), and the diamond indenter was pressed into the cross-section to thereby measure the Martens hardness of the cross-section of the surface to be measured.

The transparent resin layer preferably has an elastic recovery of 50% or more, more preferably 55% or more, and still more preferably 60% or more. When the elastic recovery of the transparent resin layer is within the range described above, a decorative sheet for floors with excellent damage resistance can be obtained.

The elastic recovery of the transparent resin layer is a value obtained from a load-displacement curve obtained by Martens hardness measurement by dividing the graph into a press working region, an elastic working region, and a plastic working region, and calculating the area of each region, and then calculating the elastic recovery from the ratio of press workload to elastic workload.

```
Press workload (mN·μm) = Elastic workload (mN·μm) + Plastic
workload (mN·μm)
```

$$\text{Elastic recovery (\%) = (Elastic workload/Press workload) x 100}$$

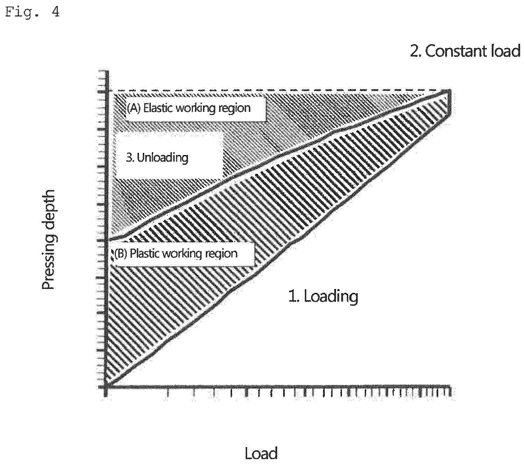

Fig. 4 is a conceptual diagram of the elastic working region and plastic working region in a load-displacement curve obtained by measuring Martens hardness. In Fig. 4, region (A) is the elastic working region, and region (B) is the plastic working region.

Primer Layer

A primer layer may be provided on the transparent resin layer. The primer layer can be formed by applying a known primer agent to the surface of the transparent resin layer. Examples of primer agents include urethane resin primer agents comprising an acrylic-modified urethane resin (an acrylic urethane resin) etc., primer agents comprising a urethane-cellulose resin (e.g., a resin obtained by adding hexamethylene diisocyanate to a mixture of urethane and nitrocellulose), resin primer agents comprising a block copolymer of acrylic and urethane, and the like. Additives may be added to the primer agent, as required. Examples of additives include fillers, such as calcium carbonate and clay; flame retardants, such as magnesium hydroxide; antioxidants; lubricants; foaming agents; ultraviolet absorbers; light stabilizers; and the like. The amount of additives can be suitably determined according to product characteristics.
The coating amount of the primer agent is not particularly limited, but is generally about 0.1 to 100 g/m$^2$, and preferably about 0.1 to 50 g/m$^2$.
The thickness of the primer layer is not particularly limited, but is generally about 0.01 to 10 $\mu$m, and preferably about 0.1 to 1 $\mu$m.

Surface-protecting Layer

The decorative sheet for floors of the present invention has a surface-protecting layer. The surface-protecting layer is provided as the uppermost surface layer of the decorative sheet for floors.
The resins that constitute the surface-protecting layer preferably comprise a curable resin, such as a thermosetting resin or an ionizing radiation-curable resin (e.g., an electron beam-curable resin). In particular, from the viewpoint of scratch resistance due to a high level of surface hardness, convex shape retention, productivity, etc., the surface-protecting layer preferably comprises an ionizing radiation-curable resin, and the resins that constitute the surface-protecting layer more preferably comprise an ionizing radiation-curable resin.
Examples of thermosetting resins include unsaturated polyester resins, polyurethane resins (including two-component curable polyurethane), epoxy resins, amino alkyd resins, phenol resins, urea resins, diallyl phthalate resins, melamine resins, guanamine resins, melamine-urea copolycondensation resins, silicone resins, polysiloxane resins, and the like.
These resins may contain crosslinking agents, curing agents (e.g., polymerization initiators), polymerization accelerators, etc. Examples of curing agents include isocyanate, organic sulfonic acid salts, etc., which can be added to unsaturated polyester resins, polyurethane resins, etc.; organic amines, etc., which can be added to epoxy resins; peroxides, such as methyl ethyl ketone peroxide; and radical initiators, such as azoisobutylnitrile, which can be added to unsaturated polyester resins.
As the method for forming the surface-protecting layer using a thermosetting resin, for example, a solution of a thermosetting resin is applied by a coating method, such as roll coating or gravure coating, followed by drying and curing.
The ionizing radiation-curable resin is not limited as long as it can undergo a crosslinking polymerization reaction upon irradiation with ionizing radiation and is formed into a three-dimensional polymer structure. For example, one or more types of prepolymers, oligomers, and monomers that have, in the molecule, a polymerizable unsaturated bond crosslinkable by irradiation with ionizing radiation, or an epoxy group can be used. Specific examples include acrylate resins, such as urethane acrylate, polyester acrylate, and epoxy acrylate; silicone resins, such as siloxane; polyester resins; epoxy resins; and the like.
Examples of ionizing radiation include visible rays, ultraviolet rays (near ultraviolet rays, vacuum ultraviolet rays, etc.), X rays, electron beams, ionic lines, etc. Of these, ultraviolet rays and/or electron beams are desirable.
Examples of the source of ultraviolet rays include ultra-high-pressure mercury lamps, high-pressure mercury lamps, low-pressure mercury lamps, carbon arc lamps, black-light fluorescent lamps, metal halide lamps, and like light sources. The wavelength of ultraviolet rays is about 190 to 380 nm.
Examples of the source of electron beams include various electron beam accelerators, such as Cockoroft-Walton, Van de Graaff, resonance transformer, insulated core transformer, linear, Dynamitron, and high-frequency accelerators. The energy of the electron beam is preferably about 100 to 1000 keV, and more preferably about 100 to 300 keV. The exposure dose of the electron beam is preferably about 2 to 15 Mrad.
Although the ionizing-radiation-curable resin is sufficiently cured by irradiation with an electron beam, it is preferable to add a photopolymerization initiator (sensitizer) when the resin is cured by irradiation with ultraviolet rays.

The photopolymerization initiator used in the case of a resin having a radically polymerizable unsaturated group is, for example, at least one of the following: acetophenones, benzophenones, thioxanthones, benzoin, benzoin methyl ether, Michler's benzoyl benzoate, Michler's ketone, diphenyl sulfide, dibenzyl disulfide, diethyl oxide, triphenyl biimidazole, isopropyl-N,N-dimethylaminobenzoate, and the like. The photopolymerization initiator used in the case of a resin having a cation polymerizable functional group is, for example, at least one of the following: aromatic diazonium salts, aromatic sulfonium salts, metallocene compounds, benzoin sulfonate, furyloxy sulfoxonium diallyliodosyl salts, and the like.

The amount of the photopolymerization initiator added is not particularly limited. The amount is generally about 0.1 to 10 parts by mass, based on 100 parts by mass of ionizing radiation-curable resin.

The thickness of the surface-protecting layer is not particularly limited, and can be suitably determined according to the characteristics of the final product. The thickness is preferably 10 um or more, and more preferably 11 to 30 $\mu$m.

The surface-protecting layer of the decorative sheet for floors of the present invention has a surface free energy of 27 mJ/m$^2$ or more and less than 30 mJ/m$^2$, and a Martens hardness of 70 N/m$^2$ or more. When the wetting tension and Martens hardness of the surface-protecting layer are set to be within the ranges described above, the resulting decorative sheet has an appropriately low level of wiping resistance, grime that occurs during housing construction can be easily wiped off, and furthermore, oil-based grime can also be easily wiped off.

The surface free energy of the surface-protecting layer is 27 mJ/m$^2$ or more and less than 30 mJ/m$^2$, and preferably 27.9 mJ/m$^2$ or more and 29.5 mJ/m$^2$ or less.

The method for adjusting the surface free energy of the surface-protecting layer to 27 mJ/m$^2$ or more and less than 30 mJ/m$^2$ is preferably, for example,

    1) a method of adding an inorganic filler to the surface-protecting layer, and
    2) a method for adding silicone or the like to the surface-protecting layer.

Preferably, the surface free energy is adjusted by a method of adding an inorganic filler, preferably a hydrophobized inorganic filler (hydrophobic inorganic filler), to the surface-protecting layer.

The method of measuring the surface free energy as referred to herein is as follows. Specifically, the contact angle of water, ethylene glycol, and n-hexadecane with the surface of each decorative sheet is measured by the sessile drop method using an automatic contact angle meter (Dropmaster 300 produced by Kyowa Interface Science Co., Ltd.). The measurement conditions for the sessile drop method are as follows: droplet amount: 2 $\mu$L; distance between solid and dotted lines on an image monitor screen with a standard field of view: 153; measured 5 seconds after the droplet drops onto the surface; environmental temperature: 23$\pm$3°C; and environmental moisture: 50$\pm$10%. The surface free energy is determined from the measurement results with reference to the Kitazaki-Hata theory (Journal of the Adhesion Society of Japan (1972), J. Adhesion (1987)).

Examples of inorganic fillers include silica, aluminum oxide, silicon carbide, silicon dioxide, calcium titanate, barium titanate, magnesium pyroborate, zinc oxide, silicon nitride, zirconium oxide, chromium oxide, iron oxide, boron nitride, diamond, emery, glass fiber, and the like. Any of these fillers (untreated inorganic fillers), and those obtained by hydrophobizing these fillers (hydrophobized inorganic fillers), can be used as the inorganic filler. Hydrophobized inorganic fillers are preferable as inorganic fillers.

The method of hydrophobizing the inorganic filler is not particularly limited. The inorganic filler can be hydrophobized by a known method. Examples of methods include a method of hydrophobizing an inorganic filler by a silicone oil treatment agent; a method of treating an inorganic filler with an alkyl silazane treatment agent, a trimethylsilylating agent, and/or alkoxysilane, and then treating the filler with a silicone oil treatment agent described above; a method of treating an inorganic filler with a silicone oil treatment agent and then further treating the filler with a trimethylsilylating agent or an alkylsilazane treatment agent; a method of hydrophobizing an inorganic filler with alkoxysilane; a method of treating an inorganic filler with alkoxysilane and then with a silicone oil treatment agent alone or a silicone oil treatment agent and alkoxysilane; a method of treating an inorganic filler with dimer diol siloxane and/or trimethyl silanol or cyclosiloxane; and the like. Examples of hydrophobizing treatment methods include not only those mentioned above but also other methods, such as treatment methods using various coupling agents (e.g., silane coupling agents, titanate coupling agents, and aluminate coupling agents), surfactants (e.g., phosphoric acid-based surfactants and fatty acid-based surfactants), oils and fats, and stearic acid. The various products for hydrophobizing untreated inorganic fillers (for example, all of the treatment agents such as silicone oil treatment agents, silane coupling agents, and surfactants) described above may be hereinafter collectively referred to as "hydrophobizing agents."

Examples of silicone oil treatment agents include, but are not limited to, straight silicone oils such as dimethyl silicone oil, methyl phenyl silicone oil, and methyl hydrogen silicone oil; and modified silicone oils such as amino modified silicone oil, epoxy modified silicone oil, carboxyl modified silicone oil, carbinol modified silicone oil, methacrylic modified silicone oil, mercapto modified silicone oil, phenol modified silicone oil, one-terminal reactive modified silicone oil, heterofunctional-group modified silicone oil, polyether modified silicone oil, methyl styryl modified silicone oil, alkyl modified silicone oil, higher fatty ester modified silicone oil, hydrophilic specialty modified silicone oil, higher-alkoxyl modified silicone oil, higher fatty acid-containing modified silicone oil, and fluorine modified silicone oil.

Examples of alkylsilazane treatment agents include, but are not limited to, hexamethyl disilazane, vinyl silazane, and the like.

Examples of trimethylsilylating agents include trimethylsilanol, trimethylmethoxysilane, trimethylchlorosilane, aminomethyltrimethylsilane, dimethylaminotrimethylsilane, and diethylaminotrimethylsilane.

Examples of alkoxysilanes include, but are not limited to, alkoxy silane compounds contained in the silane coupling agents described below.

Examples of silane coupling agents include, but are not limited to, alkoxy silane compounds such as methyltrimethoxysilane, dimethyldimethoxysilane, trimethylmethoxysilane, methyltriethoxysilane, dimethyldiethoxysilane, trimethylethoxysilane, n-hexyltrimethoxysilane, n-hexyltriethoxysilane, n-octyltriethoxysilane, decyltriethoxysilane, phenyltrimethoxysilane, benzyltriethoxysilane, propyltrimethoxysilane, propyltriethoxysilane, diethoxymethylphenylsilane, allyltriethoxysilane, vinyltrimethoxysilane, vinyltriethoxysilane, and aminopropyltriethoxysilane, aminopropyltrimethoxysilane; chlorosilane compounds such as trimethylchlorosilane and diethyl dichlorosilane; and the like.

Examples of titanate-based coupling agents include, but are not limited to, isopropyl tridecylbenzenesulphonyl titanate, isopropyl tris(dioctylpyrophosphate)titanate, tetraisopropyl bis(dioctylphosphite)titanate, tetraoctyl bis(ditridecylphosphite)titanate, tetra(2,2-diallyloxymethyl-1-butyl)bis(di-tridecyl)phosphite titanate, bis(dioctylpyrophosphate)oxyacetate titanate, bis(dioctylpyrophosphate)ethylene titanate, isopropyl tri(N-aminoethyl-aminoethyl)titanate, and the like.

Examples of aluminate coupling agents include, but are not limited to, acetoalkoxy aluminum diisopropylate, and the like.

The surfactant is not particularly limited. For example, any of the following can be used: anionic surfactants, cationic surfactants, nonionic surfactants, and amphoteric surfactants. The oils and fats are not particularly limited. Various known oils and fats can be used.

The method for hydrophobizing an inorganic filler with the various hydrophobizing agents mentioned above is not particularly limited. The hydrophobizing treatment can be performed by a known method. Examples include a method of adding (e.g., spraying) to an untreated inorganic filler a stock solution of a hydrophobizing agent or a dilute of a hydrophobizing agent in water or an organic solvent (dry treatment method); a method of treating (e.g., immersing) an untreated inorganic filler in a stock solution of a hydrophobizing agent, an aqueous solution of a hydrophobizing agent, or a solvent containing a hydrophobizing agent, and then drying (wet-treatment method); and the like. With such treatment, a part or all of the surface of the inorganic filler is, for example, (a) coated with a hydrophobizing agent, (b) adsorbed on a hydrophobizing agent, or (c) coated with and adsorbed on a hydrophobizing agent (a combination of (a) and (b)). As a result, a hydrophobized inorganic filler is obtained. Such various hydrophobizing agents may be used singly or in a combination of two or more.

The inorganic fillers can be used singly or in a combination of two or more. An untreated inorganic filler and a hydrophobized inorganic filler may be used in combination. Various commercially available products can be used as the untreated inorganic filler and the hydrophobized inorganic filler.

Among the inorganic fillers that can be used in the present invention, hydrophobized inorganic fillers (hydrophobic inorganic fillers) are preferable, and hydrophobized silica (hydrophobic silica) is more preferable from the viewpoint of physical properties for use in floors, coating aptitude of the surface-protecting layer, the matte effect of the decorative sheet, etc.

From the viewpoint of easy cleanability, the hydrophobized inorganic filler content of the surface-protecting layer is preferably 0.5 to 30 parts by mass, more preferably 1 to 25 parts by mass, and still more preferably 5 to 20 parts by mass, based on 100 parts by mass of the resins (resin components) that constitute the surface-protecting layer.

The shape of the hydrophobized inorganic filler is not particularly limited, and may be, for example, spherical, cubic, rods, plates, or needles.

When the hydrophobized inorganic filler is spherical, the particle size (and average particle diameter) of the hydrophobized inorganic filler is not particularly limited. For example, an inorganic filler with a mode diameter (a particle size at a local maximum in a particle size distribution and the most frequently occurring particle size) of about 1 to 10 $\mu$m is preferable, and an inorganic filler with a mode diameter of 2 to 6 $\mu$m is more preferable. To enhance easy cleanability, the particle size of the hydrophobized inorganic filler is preferably 1/2 or less of the thickness of the surface- protecting layer. For example, when the surface-protecting layer is 10 $\mu$m, the inorganic filler preferably has a particle size of 5 $\mu$m or less. The particle size (mode diameter) of the hydrophobized inorganic filler of the present invention is a value measured by a light scattering method.

When a hydrophobized inorganic filler and an untreated inorganic filler are used in combination, the amount of the untreated inorganic filler to be used is preferably 0.5 to 15 parts by mass, and more preferably 1 to 10 parts by mass, based on 100 parts by mass of the resins (resin components) that constitute the surface-protecting layer. The particle size of the untreated inorganic filler is preferably such that the mode diameter is about 1 to 10 $\mu$m.

When silicone is incorporated into the surface-protecting layer, the amount of silicone incorporated is preferably 0.1 to 1 parts by mass, and more preferably 0.1 to 0.5 parts by mass, based on 100 parts by mass of the resins (resin components) that constitute the surface-protecting layer in view of achieving both of ease of wiping and slip resistance.

The Martens hardness of the surface-protecting layer is 70 N/mm$^2$ or more. In consideration of cracking of the sheet for floors due to impact damage that occurs when an object is dropped on it, the surface-protecting layer preferably has a Martens hardness of 70 N/mm$^2$ or more and 200 N/mm$^2$ or less, and more preferably 70 N/mm$^2$ or more and 140 N/mm$^2$ or less.

The Martens hardness of the surface-protecting layer can be appropriately adjusted, for example, by a method of 1) changing the resins that constitute the surface-protecting layer to resins having different hardness (mixing two or more types of curable resins having different hardness), or 2) adding various additives, such as matting agents or fillers, to the surface-protecting layer.

The Martens hardness of the surface-protecting layer can be measured by the same method as the Martens hardness of the transparent resin layer. In order to avoid the influence of the hardness of layers other than the layer whose Martens hardness is to be measured, the Martens hardness of the cross-section of the layer whose Martens hardness is to be measured (surface-protecting layer) was measured. For this measurement, the decorative sheet was embedded in a resin (cold-curing epoxy two-component curable resin) and allowed to stand at room temperature for at least 24 hours for curing. The cured embedded sample was then mechanically polished to expose the cross-section of the layer whose Martens hardness is to be measured (surface-protecting layer), and the diamond indenter was pressed into the cross-section (if the layer to be measured contains fine particles, such as inorganic fillers, then at a position where fine particles are not present) to thereby measure the Martens hardness of the cross-section of the surface to be measured.

The surface-protecting layer of the decorative sheet for floors of the present invention has a coefficient of slip resistance (C.S.R value) of 0.3 or more. The coefficient of slip resistance (C.S.R value) is a value measured with 100% cotton socks using a Tokyo Institute of Technology sliding tester (O-Y·PSM). When the coefficient of slip resistance (C.S.R value) is adjusted to the range described above, grime can be easily wiped off; furthermore, when the decorative sheet for floors is used as a flooring material, people walking on the sheet are less likely to slip and a high level of safety is provided. Furthermore, the surface-protecting layer preferably has a coefficient of slip resistance (C.S.R value) of less than 0.4. When the surface-protecting layer has a coefficient of slip resistance (C.S.R value) within the range described above, grime can be more easily wiped off.

The surface-protecting layer may further contain various additives, such as solvents, colorants (e.g., dyes and pigments), matting agents, fillers (e.g., extenders), antifoaming agents, leveling agents, and thixotropy-imparting agents, as required.

Examples of the method for forming a surface-protecting layer comprising an ionizing radiation-curable resin include a method comprising applying a solution (a surface-protecting layer-forming resin composition) containing (1) a resin (e.g., an ionizing radiation-curable resin) and an hydrophobized inorganic filler, optionally with (2) other resins, an ultraviolet absorber, an antibacterial agent, the various additives mentioned above, and the like by a coating method, such as gravure coating or roll coating, followed by curing the ionizing-radiation-curable resin.

Back-Surface Primer Layer

A back-surface primer layer may be formed on the back surface (the surface opposite to the surface on which the picture pattern layer is laminated) of the base material sheet, as required. For example, the back-surface primer layer is effective when the decorative sheet for floors is laminated on an adherend to form a decorative plate for floors.

The back-surface primer layer can be formed by applying a known primer agent to the base material sheet. Examples of primer agents include urethane resin primer agents comprising an acrylic-modified urethane resin (an acrylic urethane resin) etc., primer agents comprising a urethane-cellulose resin (e.g., a resin obtained by adding hexamethylene diisocyanate to a mixture of urethane and nitrocellulose), resin primer agents comprising a block copolymer of acrylic and urethane, and the like. Additives may be added to the primer agent, as required. Examples of additives include fillers, such as calcium carbonate and clay, flame retardants, such as magnesium hydroxide, antioxidants, lubricants, foaming agents, ultraviolet absorbers, and light stabilizers. The amount of additives can be suitably determined according to product characteristics.

The coating amount of the primer agent is not particularly limited, and is generally about 0.1 to 100 g/m$^2$ or less, and preferably about 0.1 to 50 g/m$^2$.

The thickness of the back-surface primer layer is not particularly limited, but is generally 0.01 to 10 $\mu$m, and preferably about 0.1 to 1 $\mu$m.

Backer Layer

A backer layer (a synthetic resin layer for improving damage resistance and reducing the effect of an adherend) is optionally provided on the back surface of the base material sheet (if the picture pattern layer is formed on the back surface of the base material sheet, then on the back surface of the picture pattern layer). The damage resistance particularly refers to resistance to formation of dents when a load is partially applied. Although the decorative sheet for floors of the present invention has sufficient damage resistance even without a backer layer, the presence of a backer layer can further improve various types of performance, such as damage resistance.

The backer layer is suitably formed by subjecting a molten resin to extrusion molding. For example, extrusion molding using a T-die is suitable.

Examples of the method for bonding the back surface of the base material sheet and the backer layer include a method for bonding, by heat welding, the base material sheet and a backer layer obtained by subjecting a molten resin to extrusion molding; a method of providing an adhesive layer (and further a primer layer, if required) between the base material sheet and the backer layer to achieve bonding; and the like.

Examples of resins that constitute the backer layer include, but are not limited to, thermoplastic resins, such as polyethylene, polypropylene (PP), polyvinyl alcohol, ethylene-vinyl alcohol copolymers, polymethylene, polymethylpentene, polyethylene terephthalate, amorphous polyethylene terephthalate (A-PET), highly thermal resistant polyalkylene terephthalates (e.g., PET-G, product name (produced by Eastman Chemical Company), which is polyethylene terephthalate in which a part of the ethylene glycol is substituted by 1,4-cyclohexane dimethanol, diethylene glycol, or the like), polybutylene terephthalate (PBT), polycarbonate, polyarylate, polyethylene naphthalate, polyethylene naphthalate-isophthalate copolymers, polyimide, polystyrene, polyamide, ABS (acrylonitrile-butadiene-styrene copolymers), and the like. These resins may be used singly or in a combination of two or more.

The thickness of the backer layer can be suitably determined depending on the application of the final product, the method of use of the final product, etc. In general, the thickness is preferably 100 to 800 $\mu$m. Within this range, the thickness is more preferably 100 to 600 $\mu$m.

The adhesion surface of the backer layer may be subjected to a known adhesion-enhancing treatment, such as corona discharge treatment, plasma treatment, degreasing treatment, or surface-roughening treatment, as required. Moreover, in consideration of the adhesion with an adherend, a primer layer may be further provided on the back surface of the backer layer.

Embossing

The decorative sheet for floors may be embossed on the uppermost surface layer side, as required.

The embossing method is not particularly limited. For example, the following method is preferable: after the front surface of the surface-protecting layer is softened by heating, and pressed and shaped by using an embossing plate, cooling is performed. Depending on the material of the decorative sheet for floors, which is a final product, or the surface-protecting layer, for example, after the front surface of the transparent resin layer is softened by heating, and pressed and shaped by using an embossing plate, a surface-protecting layer may be formed on the resin layer.

The embossing is conducted using a known sheet-fed or rotary embossing machine. Examples of irregular shapes include wood-grain vessel patterns, stone sheet surface concave-convex patterns (e.g., granite cleavage planes), textile surface textures, matte patterns, grain patterns, hairline patterns, linear streak patterns, and the like.

2. Decorative Plate For Floors of the Present Invention

A decorative plate for floors can be produced by laminating the above decorative sheet for floors on an adherend. The adherend is not limited, and adherends used for known decorative plates for floors can be used. Examples of the adherend include wood-based materials, metals, ceramics, plastics, glass, and the like. In particular, wood-based materials can be preferably used for the decorative sheet for floors. Specific examples of wood-based materials include sliced veneers, single panels, plywood panels, particleboards, medium-density fiberboards (MDF), chipboards, composite base materials in which a chipboard is laminated, and the like that are formed from various materials, such as Japanese cedar, Japanese cypress, zelkova, pine, lauan, teak, and melapi. Preferred wood-based materials are plywood panels, particleboards, and medium-density fiberboards (MDF).

The method for laminating the decorative sheet for floors and an adherend is not limited. For example, the decorative sheet for floors can be bonded to an adherend by using an adhesive. The adhesive may be suitably selected from known adhesives depending on, for example, the type of adherend. Examples include polyvinyl acetate, polyvinyl chloride, vinyl chloride-vinyl acetate copolymers, ethylene-acrylic acid copolymers, ionomers, butadiene-acrylonitrile rubber, neoprene rubber, natural rubber, and the like. These adhesives can be used singly or in a combination of two or more.

Examples

The following describes the present invention in detail with reference to Examples and Comparative Examples. However, the present invention is not limited to the embodiments of the Examples.

Example 1

Production of Decorative Sheet For Floors

A primer layer (back-surface primer layer) was provided on the back surface of a base material sheet comprising a 60-$\mu$m-thick colored polypropylene film. Next, a picture pattern layer was formed by printing on the front surface of the base material sheet, and an adhesive layer was further formed on the picture pattern layer. Next, an 80-$\mu$m-thick sheet of transparent polypropylene-based resin (transparent random polypropylene resin) was laminated on the adhesive layer by an extrusion lamination method to form a transparent resin layer. Subsequently, the surface of the transparent random polypropylene-based resin sheet was subjected to a corona discharge treatment, and then coated with a two-component curable urethane resin to form a primer layer. Thereafter, a surface-protecting layer-forming resin composition comprising 70 parts by mass of a difunctional urethane acrylate oligomer $\alpha$, 30 parts by mass of a hexafunctional aliphatic urethane acrylate oligomer, and 14 parts by mass of silica hydrophobized with silicone oil (mode diameter: 3 $\mu$m) was applied to the front surface of the primer layer by a gravure coating method to form a coating film (13 $\mu$m). The coating film was then cured by irradiation with an electron beam using an electron beam irradiation device in an environment with an oxygen concentration of 200 ppm or less at an acceleration voltage of 175 KeV with a dose of 5 Mrad. Thus, a surface-protecting layer was formed. Further, the surface-protecting layer side was heated with a non-contact infrared heater to thereby soften the base material sheet and the transparent resin layer, and embossing was immediately conducted by hot pressing to form a concavo-convex pattern of a wood-grain vessel pattern. Thus, a decorative sheet for floors was produced. The surface-protecting layer of the obtained decorative sheet for floors had a Martens hardness of 130 N/mm$^2$.

Production of Decorative Plate for Floors

A 2.5-mm-thick medium-density wood fiberboard (MDF) was uniformly coated with an aqueous emulsion adhesive (BA-10L (main agent):BA-11B (curing agent) = 100:2.5 (mass ratio), produced by Japan Coating Resin Co., Ltd.) in an amount of 80 g/m$^2$ and bonded to the back-surface primer layer side of the decorative sheet for floors obtained above, followed by curing at room temperature for 3 days, thereby producing a decorative plate for floors of Example 1.

Example 2

A decorative sheet for floors and a decorative plate for floors were produced in the same manner as in Example 1 except that hydrophobized silica with a mode diameter of 5 $\mu$m was used in place of the hydrophobized silica of Example 1 (mode diameter: 3 $\mu$m).

Example 3

A decorative sheet for floors and a decorative plate for floors were produced in the same manner as in Example 1 except that a composition produced by further adding 0.01 parts by mass of silicone to the surface-protecting layer-forming resin composition of Example 1 was used.

Example 4

A decorative sheet for floors and a decorative plate were produced in the same manner as in Example 1 except that the Martens hardness of the surface-protecting layer of Example 1 was changed from 130 N/mm$^2$ to 190 N/mm$^2$.

Example 5

A decorative sheet for floors and a decorative plate for floors were produced in the same manner as in Example 1 except that the Martens hardness of the surface-protecting layer of Example 1 was changed from 130 N/mm$^2$ to 70 N/mm$^2$.

Example 6

A decorative sheet for floors and a decorative plate for floors were produced in the same manner as in Example 1 except that a transparent ionomer resin sheet with a thickness of 80 $\mu$m was used in place of the transparent random polypropylene resin sheet of Example 1.

Example 7

A decorative sheet for floors and a decorative plate for floors were produced in the same manner as in Example 1 except that a transparent homopolypropylene resin sheet with a thickness of 80 $\mu$m was used in place of the transparent random polypropylene resin sheet of Example 1.

Example 8

A decorative sheet for floors and a decorative plate for floors were produced in the same manner as in Example 1 except that a transparent olefin elastomer resin sheet with a thickness of 80 $\mu$m was used in place of the transparent random polypropylene resin sheet of Example 1.

Example 9

A decorative sheet for floors and a decorative plate were produced in the same manner as in Example 1 except that the adherend of the decorative plate of Example 1 was changed from the MDF to a falcata plywood with a thickness of 12 mm.

Example 10

A decorative sheet for floors and a decorative plate for floors were produced in the same manner as in Example 1 except that non-hydrophobized silica (untreated silica) (mode diameter: 3 $\mu$m) was used in place of the hydrophobized silica (mode diameter: 3 $\mu$m) of Example 1, and 0.01 parts by mass of silicone was added.

Comparative Example 1

A decorative sheet for floors and a decorative plate for floors were produced in the same manner as in Example 1 except that non-hydrophobized silica (untreated silica) (mode diameter: 11 $\mu$m) was used in place of the hydrophobized silica (mode diameter: 3 $\mu$m) of Example 1.

Comparative Example 2

A decorative sheet for floors and a decorative plate for floors were produced in the same manner as in Example 1 except that non-hydrophobized silica (untreated silica) (mode diameter: 11 $\mu$m) was used in place of the hydrophobized silica (mode diameter: 3 $\mu$m) of Example 1, the thickness of the surface-protecting layer was changed from 13 $\mu$m to 15 $\mu$m, and the Martens hardness of the surface-protecting layer was changed from 130 N/mm$^2$ to 110 N/mm$^2$.

Comparative Example 3

A decorative sheet for floors and a decorative plate for floors were produced in the same manner as in Example 1 except that 12 parts by mass of non-hydrophobized silica (untreated silica) (mode diameter: 11 $\mu$m) was used in place of 14 parts by mass of the hydrophobized silica (mode diameter: 3 $\mu$m) of Example 1, the thickness of the surface-protecting layer was changed from 13 $\mu$m to 15 $\mu$m, and the Martens hardness of the surface-protecting layer was changed from 130 N/mm$^2$ to 60 N/mm$^2$.

Comparative Example 4

A decorative sheet for floors and a decorative plate for floors were produced in the same manner as in Example 1 except that untreated silica (mode diameter: 3 $\mu$m) was used in place of the hydrophobized silica (mode diameter: 3 $\mu$m) of Example 1.

Comparative Example 5

A decorative sheet for floors and a decorative plate for floors were produced in the same manner as in Example 1 except that untreated silica (mode diameter: 5 μm) was used in place of the hydrophobized silica (mode diameter: 3 μm) of Example 1.

Comparative Example 6

A decorative sheet for floors and a decorative plate for floors were produced in the same manner as in Example 1 except that untreated silica (mode diameter: 3 μm) was used in place of the hydrophobized silica (mode diameter: 3 μm) of Example 1, and the Martens hardness of the surface-protecting layer was changed from 130 N/mm² to 70 N/mm².

Comparative Example 7

A decorative sheet for floors and a decorative plate for floors were produced in the same manner as in Example 1 except that untreated silica (mode diameter: 3 μm) was used in place of the hydrophobized silica (mode diameter: 3 μm) of Example 1, and the Martens hardness of the surface-protecting layer was changed from 130 N/mm² to 60 N/mm².

Comparative Example 8

As a base material sheet, a picture pattern layer was formed by printing on the surface of thin paper with a basis weight of 35 g/m². The surface was further coated with a two-component curable urethane resin to form a primer layer. Subsequently, the surface of the primer layer was coated with a a surface-protecting layer-forming resin composition comprising 70 parts by mass of a difunctional urethane acrylate oligomer α, 30 parts by mass of a hexafunctional aliphatic urethane acrylate oligomer, and 14 parts by mass of silica hydrophobized with silicone oil (mode diameter: 3 μm) by a gravure coating method to form a coating film (13 μm). The coating film was then cured by irradiation with an electron beam using an electron beam irradiation device in an environment with an oxygen concentration of 200 ppm or less at an acceleration voltage of 175 KeV with a dose of 5 Mrad to form a surface-protecting layer. Thus, a decorative sheet for floors was produced. A decorative plate for floors was produced in the same manner as above except that this decorative sheet for floors was used.

In Examples 1 to 10 and Comparative Examples 1 to 8, the Martens hardness of the surface-protecting layer was measured with a surface film physical property tester (PICODENTOR HM-500 produced by Fischer Instruments K.K.). Specifically, a diamond indenter (Vickers indenter) shown in Fig. 3 (a) was pressed into each measurement sample as shown in Fig. 3 (b). The surface area A (mm²) was calculated from the length of the diagonal line of a pyramid-shaped dent formed on the surface, and test load F (N) was divided by the surface area A to thereby determine the hardness. The pressing conditions were as follows. As shown in Fig. 3(c), first, a load of 0 to 5 mN was applied for 10 seconds at room temperature (ambient laboratory temperature). Next, a load 5 mN was maintained for 5 seconds. Finally, unloading was performed from 5 to 0 mN for 10 seconds. The hardness determined by F/A, where A is surface area and F is test load, was defined as the Martens hardness. In order to avoid the influence of the hardness of layers other than the surface-protecting layer whose Martens hardness is to be measured, the Martens hardness of the cross-section of the surface-protecting layer was measured. For this measurement, the decorative sheet was embedded in a resin (cold-curing epoxy two-component curable resin) and allowed to stand at room temperature for at least 24 hours for curing. The cured embedded sample was then mechanically polished to expose the cross-section of the surface-protecting layer, and the diamond indenter was pressed into the cross-section (if the surface-protecting layer contains fine particles, such as inorganic fillers, then at a position where fine particles are not present) to thereby measure the Martens hardness of the cross-section of the surface protecting layer.

The surface free energy of the surface-protecting layer is measured by the following measurement method. Specifically, the contact angle of water, ethylene glycol, and n-hexadecane with the surface of each decorative sheet was measured by the sessile drop method using an automatic contact angle meter (Dropmaster 300 produced by Kyowa Interface Science Co., Ltd.). The measurement conditions of the sessile drop method were as follows: droplet amount: 2 μL; distance between solid and dotted lines on an image monitor screen with a standard field of view: 153; measured 5 seconds after the droplet drops on the surface; environmental temperature: 23±3°C, environmental moisture: 50±10%. The surface free energy was determined from the measurement results with reference to the Kitazaki-Hata theory (Journal of the Adhesion Society of Japan (1972), J. Adhesion (1987)).

The Martens hardness of the transparent resin layer was measured in the same manner as in Martens hardness of the surface-protecting layer described above. However, in order to avoid the influence of the hardness of layers other than the transparent resin layer whose Martens hardness was to be measured, the Martens hardness of the cross-section of the transparent resin layer was measured. For this measurement, the decorative sheet was embedded in a resin (cold-curing epoxy two-component curable resin) and allowed to stand at room temperature for at least 24 hours for curing. The cured embedded sample was then mechanically polished to expose the cross-section of the transparent resin layer, and the diamond indenter was pressed into the cross-section to thereby measure the Martens hardness of the cross-section of the transparent resin layer.

The elastic recovery of the transparent resin layer was calculated from a load-displacement curve obtained by Martens hardness measurement by dividing the graph into a press working region, an elastic working region, and a plastic working region, and calculating the area of each region, and then calculating the elastic recovery from the ratio of press workload to elastic workload according to the following formula.

$$\text{Press workload (mN·µm)} = \text{Elastic workload (mN·µm)} + \text{Plastic workload (mN·µm)}$$

$$\text{Elastic recovery (\%)} = (\text{Elastic workload / Press workload}) \times 100$$

Evaluation 1:Easy Cleanability of Gypsum Powder

First, putty powder (Wide Super 60 produced by Yayoi Chemical Industry Co., Ltd.) kneaded by adding an appropriate amount of water was cured and filed with a #180 file to obtain gypsum powder. Next, the putty powder was sprayed over the entire surface of each of the decorative sheets for floors obtained in the Examples and Comparative Examples in an amount of about 0.5 g/*shakkaku* (303 mm x 303 mm). Then, the gypsum powder was thinly spread over the surface of each decorative sheet for floors with a dry rag (toweling fabric). Finally, the surface was wiped twice with a rag (toweling fabric) moistened with water so that no grime due to gypsum powder remained. The surface of each decorative sheet for floors after the wiping was evaluated. The evaluation criteria are as follows. A score of 1 or higher was graded as passing.

2: No grime remained.
1: Slight grime remained partially.
0: Slight grime remained entirely.
-1: Grime remained entirely.

Evaluation 2: Easy Cleanability of Oil (Oleic Acid)

Oleic acid was applied to the entire surface of each of the decorative sheets for floors obtained in the Examples and Comparative Examples in an amount of about 10 g/m$^2$. The surface was wiped once with a rag (toweling fabric) moistened with water so that no grime due to the oleic acid remained. The surface of each decorative sheet for floors after the wiping was evaluated. The criteria for Evaluation 2 are as follows. A score of 1 or higher was graded as passing.

2: No grime remained.
1: No noticeable grime remained.
0: Slight grime remained.
-1: Grime remained.

Evaluation 3: Easy Cleanability (Slidability)

The coefficient of slip resistance (C.S.R value) of each decorative sheet for floors was measured on the surface-protecting layer side with 100% cotton socks using a Tokyo Institute of Technology sliding tester (O-Y·PSM). The evaluation criteria are as follows. A score of 0.3 or higher was graded as passing.
The evaluation value was less than 0.3.
The evaluation value was 0.3 or more and less than 0.4.
The evaluation value was 0.4 or more.

Evaluation 4: Wax Applicability

A wax for floors (High-tech Flooring Coat produced by Rinrei Wax Co., Ltd.) was applied to the surface of each of the decorative sheets for floors obtained in the Examples and Comparative Examples (about 10 ml/m$^2$). The surface condition after the application was visually inspected. The evaluation criteria are as follows. + was graded as passing.

+: The wax was able to be uniformly applied.

-: The surface repelled the wax, and the wax failed to be uniformly applied.

Evaluation 5: Scratch Resistance (Hoffman Scratch Test)

The scratch resistance was evaluated using a Hoffman scratch tester (produced by BYK-Gardner). Specifically, a scratch blade (an edge portion of a 7-mm-diameter cylinder) was set so as to be in contact with the surface-protecting layer of each of the decorative plates for floors obtained in the Examples and Comparative Examples at an angle of 45°, and the scratch blade was pulled to scratch the surface. In this test, the load applied to the scratch blade was changed in 100-g increments within the range of 100 to 500 g, and whether a scratch was formed on the surface-protecting layer was investigated. The evaluation criteria are as follows. A score of + or higher was graded as passing.

+++: No scratch was found at a load of 500 g.

++: No scratch was found at a load of 300 g.

+: Slight scratch was found at a load of 300 g.

-: Noticeable scratch was found at a load of 300 g.

Evaluation 6: Impact resistance (DuPont Impact Test)

The impact resistance was tested according to JIS K5600-5-3: 1999 (General test method for paints, Part 5: Mechanical properties of coating films, Section 3: Falling weight test). Specifically, a weight of 500 g was dropped from a height of 30 cm onto the decorative sheet surface of each of the decorative plates for floors obtained in the Examples and Comparative Examples. The amount of depression was measured for evaluation. Using 9 samples per test, evaluation was made based on how many samples out of the 9 samples were cracked. The evaluation criteria are as follows. A score of + or higher was graded as passing.

+++: No samples were cracked.

++: One or two samples were cracked.

+: Three to eight samples were cracked.

-: All the samples were cracked.

Evaluation 7: Gouge Resistance (Pencil Hardness Test)

The surface of each decorative plate for floors was tested in accordance with JIS K5600-5-4:1999 (Testing methods for paints, Part 5: Mechanical property of film, Section 4: Scratch hardness (Pencil method)). Whether any gouge occurs on the surface of each of the decorative plates for floors obtained in the Examples and Comparative Examples was confirmed. The evaluation criteria are as follows. A score of + or more was graded as passing.

+++: The pencil hardness was 2H or more.

++: The pencil hardness was B or more and less than 2H.

+: The pencil hardness was 3B or more and less than B.

-: The pencil hardness was 6B or more and less than 3B.

Tables 1 and 2 below show these results.

Table 1

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Surface-protecting layer | Thickness ($\mu$m) | | 13 | 13 | 13 | 13 | 13 | 13 | 13 | 13 | 13 | 13 |
| | Resin (part by mass) | Difunctional $\alpha$ | 70 | 70 | 70 | 40 | 90 | 70 | 70 | 70 | 70 | 70 |
| | | Difunctional $\beta$ | - | - | - | - | - | - | - | - | - | - |
| | | Difunctional $\gamma$ | - | - | - | - | - | - | - | - | - | - |
| | | Hexafunctional | 30 | 30 | 30 | 60 | 10 | 30 | 30 | 30 | 30 | 30 |
| | | Martens hardness (N/mm$^2$) | 130 | 130 | 130 | 190 | 70 | 130 | 130 | 130 | 130 | 130 |
| | Inorganic filler | Type | Silica | Silica | Silica | Silica | Silica | Silica | Silica | Silica | Silica | Silica |
| | | Mode diameter ($\mu$m) | 3 | 5 | 3 | 3 | 3 | 3 | 3 | 3 | 3 | 3 |
| | | Treatment | Hydrophobized | Hydrophobized | Hydrophobized | Hydrophobized | Hydrophobized | Hydrophobized | Hydrophobized | Hydrophobized | Hydrophobized | Untreated |
| | | Additive (parts by weight based on 100 parts by weight of resin) | 14 | 14 | 14 | 14 | 14 | 14 | 14 | 14 | 14 | 14 |
| | Additive | | None | None | Silicone | None | None | None | None | None | None | Silicone |
| | Surface free energy (mJ/m$^2$) | | 29.5 | 29.5 | 27.9 | 29.5 | 29.5 | 29.5 | 29.5 | 29.5 | 29.5 | 28.5 |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Transparent resin layer | Type | Random PP | Random PP | Random PP | Random PP | Random PP | Ionomer | Homo PP | Olefin elastomer | Random PP | Random PP |
| | Martens hardness ($N/mm^2$) | 302 | 302 | 302 | 30.2 | 302 | 111 | 35.1 | 15.1 | 302 | 302 |
| | Elastic recovery (%) | 51 | 51 | 51 | 51 | 51 | 63.1 | 48.3 | 57.7 | 51 | 51 |
| Base material sheet | | PP | PP | PP | PP | PP | PP | PP | PP | PP | PP |
| Adherend | | MDF | MDF | MDF | MDF | MDF | MDF | MDF | MDF | Falcata | MDF |
| 1. Easy cleanability | Hemihydrate powder | 2 | 1 | 2 | 2 | 2 | 2 | 2 | 2 | 2 | 2 |
| 2. Easy cleanability | Oil (oleic acid) | 1 | 1 | 1 | 1 | 1 | 1 | 1 | 1 | 1 | 1 |
| 3. Easy cleanability | Slidability | 0.3 or more and less than 0.4 | 0.3 or more and less than 0.4 | 0.3 or more and less than 0.4 | 0.3 or more and less than 0.4 | 0.3 or more and less than 0.4 | 0.3 or more and less than 0.4 | 03 or more and less than 0.4 | 0.3 or more and less than 0.4 | 0.3 or more and less than 0.4 | 0.3 or more and less than 0.4 |
| 4. Wax applicability | | + | + | + | + | + | + | + | + | + | + |
| 5. Scratch resistance | | ++ | ++ | ++ | +++ | + | +++ | ++ | ++ | ++ | ++ |
| 6. Impact resistance | | ++ | ++ | ++ | + | +++ | ++ | + | ++ | ++ | ++ |
| 7. Gouge resistance | | ++ | ++ | ++ | +++ | + | +++ | + | +++ | + | ++ |

Table 2

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Surface-protecting layer | Thickness ($\mu$m) | | 13 | 15 | 15 | 13 | 13 | 13 | 13 | 13 |
| | Resin (parts by mass) | Difunctional $\alpha$ | 70 | 80 | - | 70 | 70 | 90 | - | 70 |
| | | Difunctional $\beta$ | - | - | 68 | - | - | - | 68 | - |
| | | Difunctional $\gamma$ | - | - | 12 | - | - | - | 12 | - |
| | | Hexafunctional | 30 | 20 | 20 | 30 | 30 | 10 | 20 | 30 |
| | | Martens hardness (N/mm$^2$) | 130 | 110 | 60 | 130 | 130 | 70 | 60 | 130 |
| | Inorganic filler | Type | Silica | Silica | Silica | Silica | Silica | Silica | Silica | Silica |
| | | Mode diameter ($\mu$m) | 11 | 11 | 11 | 3 | 5 | 3 | 3 | 3 |
| | | Treatment | Untreated | Untreated | Untreated | Untreated | Untreated | Untreated | Untreated | Hydrophobized |
| | | Additive (parts by weight based on 100 parts by weight of resin) | 14 | 14 | 12 | 14 | 14 | 14 | 14 | 14 |
| | Additive | | None | None | None | None | None | None | None | None |
| | Surface free energy (mJ/m$^2$) | | 30.1 | 30.1 | 30.4 | 30.1 | 30.1 | 30.1 | 30.4 | 29.5 |
| Transparent resin layer | Type | | Random PP | Random PP | Random PP | Random PP | Random PP | Random PP | Random PP | None |
| | Martens hardness (N/mm$^2$) | | 30.2 | 302 | 30.2 | 30.2 | 30.2 | 30.2 | 30.2 | None |
| | Elastic recovery (%) | | 51 | 51 | 51 | 51 | 51 | 51 | 51 | None |
| Base material sheet | | | PP | PP | PP | PP | PP | PP | PP | Thin paper |
| Adherend | | | MDF | MDF | MDF | MDF | MDF | MDF | MDF | MDF |
| 1. Easy cleanability | Hemihydrate powder | | -1 | -1 | -1 | 1 | 1 | 1 | 1 | 2 |
| 2. Easy cleanability | Oil (oleic acid) | | 0 | 0 | 0 | 0 | 0 | 0 | 0 | -1 |

EP 3 437 859 A1

19

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| 3. Easy cleanability | Slidability | 0.3 or more and less than 0.4 | 0.3 or more and less than 0.4 | 0.4 or more | 0.3 or more and less than 0.4 | 03 or more and less than 0.4 | 0.3 or more and less than 0.4 | 0.4 or more | 0.3 or more and less than 0.4 |
| 4. Wax applicability | | + | + | + | + | + | + | + | + |
| 5. Scratch resistance | | ++ | ++ | ++ | ++ | ++ | + | + | ++ |
| 6. Impact resistance | | ++ | ++ | +++ | ++ | ++ | +++ | +++ | - |
| 7. Gouge resistance | | ++ | ++ | ++ | ++ | ++ | + | + | + |

EP 3 437 859 A1

The types of resins in Tables 1 and 2 are as follows. Difunctional $\alpha$: a difunctional urethane acrylate oligomer (polyol component: polyester diol; glass transition temperature: 25°C; weight average molecular weight: 1500); Difunctional $\beta$: a difunctional urethane acrylate oligomer (polyol component: polyester diol; glass transition temperature: 25°C; weight average molecular weight: 1200); Difunctional $\gamma$: a difunctional urethane acrylate oligomer (polyol component: polyester diol; glass transition temperature: -55°C; weight average molecular weight: 5000); and Hexafunctional: a hexafunctional aliphatic urethane acrylate oligomer (glass transition temperature: 200°C or more; weight average molecular weight: 1500, UA306H, produced by Kyoeisha Chemical Co., Ltd.).

Description of Reference Numerals

1. Decorative Sheet for Floors
2. Back Side Primer Layer
3. Base Material Sheet
4. Picture Pattern Layer
5. Adhesive Layer
6. Transparent Resin Layer
7. Primer Layer
8. Surface-protecting Layer
9. Embossed Pattern (Wood-grain Vessel Pattern)

## Claims

1. A decorative sheet for floors that comprises
   a base material sheet and
   at least a surface-protecting layer on the base material sheet,
   the base material sheet being a thermoplastic resin sheet,
   the surface-protecting layer having a surface free energy of 27 mJ/m$^2$ or more and less than 30 mJ/m$^2$ and having a Martens hardness of 70 N/mm$^2$ or more, and
   the coefficient of slip resistance (C.S.R value) of the surface-protecting layer as measured with 100% cotton socks using a Tokyo Institute of Technology sliding tester (O-Y·PSM) being 0.3 or more.

2. The decorative sheet for floors according to claim 1, wherein the coefficient of slip resistance (C.S.R value) of the surface-protecting layer is less than 0.4.

3. The decorative sheet for floors according to claim 1 or 2, wherein the surface-protecting layer comprises a hydrophobic inorganic filler.

4. The decorative sheet for floors according to claim 3, wherein the hydrophobic inorganic filler has a particle size of 1 $\mu$m or more and 10 $\mu$m or less in terms of mode diameter.

5. The decorative sheet for floors according to claim 3 or 4, wherein the hydrophobic inorganic filler content is 0.5 parts by mass or more and 30 parts by mass or less, based on 100 parts by mass of resins that constitute the surface-protecting layer.

6. The decorative sheet for floors according to any one of claims 3 to 5, wherein the hydrophobic inorganic filler is hydrophobic silica.

7. The decorative sheet for floors according to any one of claims 1 to 6, wherein the resins that constitute the surface-protecting layer comprise an ionizing radiation-curable resin.

8. The decorative sheet for floors according to any one of claims 1 to 7, wherein the surface-protecting layer has a thickness of 10 $\mu$m or more.

9. The decorative sheet for floors according to any one of claims 1 to 8, comprising a transparent resin layer between the base material sheet and the surface-protecting layer, the transparent resin layer having an elastic recovery of 50% or more.

10. A decorative plate for floors comprising an adherend and the decorative sheet for floors according to any one of claims 1 to 9 on the adherend.

Fig. 1

Fig. 2

Fig. 3

(a)

Martens hardness (HM hardness) $[N/mm^2] = F/A$

(b)

(c)

Fig. 4

2. Constant load

(A) Elastic working region

3. Unloading

Pressing depth

(B) Plastic working region

1. Loading

Load

## INTERNATIONAL SEARCH REPORT

International application No.

PCT/JP2017/012837

### A.    CLASSIFICATION OF SUBJECT MATTER
*B32B27/00*(2006.01)i,  *B32B7/02*(2006.01)i,  *B32B27/16*(2006.01)i,  *B32B27/20*(2006.01)i,  *E04F15/02*(2006.01)i

According to International Patent Classification (IPC) or to both national classification and IPC

### B.    FIELDS SEARCHED
Minimum documentation searched (classification system followed by classification symbols)
B32B1/00-B32B43/00, E04F15/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2015-108093 A  (Mitsubishi Chemical Corp.), 11 June 2015 (11.06.2015), claims 1, 6 to 7; paragraphs [0001], [0005], [0014] to [0018], [0040], [0056] to [0058], [0064], [0104], [0107] to [0109], [0115], [0120] to [0123], [0127] to [0130], [0138]; table 2 (Family: none) | 1-3,5-8,10 |
| A | JP 2013-83139 A  (Dainippon Printing Co., Ltd.), 09 May 2013 (09.05.2013), entire text (Family: none) | 1-10 |

☒ Further documents are listed in the continuation of Box C.    ☐ See patent family annex.

| | |
|---|---|
| *    Special categories of cited documents: <br> "A"   document defining the general state of the art which is not considered    to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
|    22 June 2017 (22.06.17) |    04 July 2017 (04.07.17) |

| Name and mailing address of the ISA/ <br>    Japan Patent Office <br>    3-4-3,Kasumigaseki,Chiyoda-ku, <br>    Tokyo 100-8915,Japan | Authorized officer <br><br> Telephone No. |
|---|---|

Form PCT/ISA/210 (second sheet) (January 2015)

**INTERNATIONAL SEARCH REPORT**

| International application No. |
| --- |
| PCT/JP2017/012837 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2012-215064 A (Dainippon Printing Co., Ltd.), 08 November 2012 (08.11.2012), entire text (Family: none) | 1-10 |
| A | JP 2005-319661 A (Fuji Photo Film Co., Ltd.), 17 November 2005 (17.11.2005), entire text (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014069507 A

**Non-patent literature cited in the description**

- **KITAZAKI-HATA.** *Journal of the Adhesion Society of Japan,* 1972
- *J. Adhesion,* 1987